# EUROPEAN PATENT APPLICATION

(11) **EP 1 333 312 A1**
(43) Date of publication of application: **06.08.2003**
(21) Application number: 02250759.4
(22) Date of filing: 05.02.2002
(51) Int. Cl.: G02F 1/035

(54) **Optical waveguide structure**

(71) Applicant: ERA PATENTS LIMITED, Leatherhead Surrey KT22 7SA (GB)
(72) Inventor: Nightingale, Stephen James, Reigate, Surrey RH2 7DA (GB)
(74) Representative: Rackham, Stephen Neil

(57) **Abstract**

An improved electrode structure for an optical waveguide device using the optoelectric effect is provided. A signal electrode (30) is formed with an extending portion (30a,30b) which overlaps, but does not contact, ground electrodes (32,33). The electrode structure has a lower impedance and hence a lower loss than conventional electrode structures. The electrode structure has the effect of broadening the current distribution in the ground electrodes which allows longer, and hence more sensitive modulator devices to be constructed.

## Description

The present invention relates to coplanar waveguide structures, in particular waveguide structures for use in optical modulators.

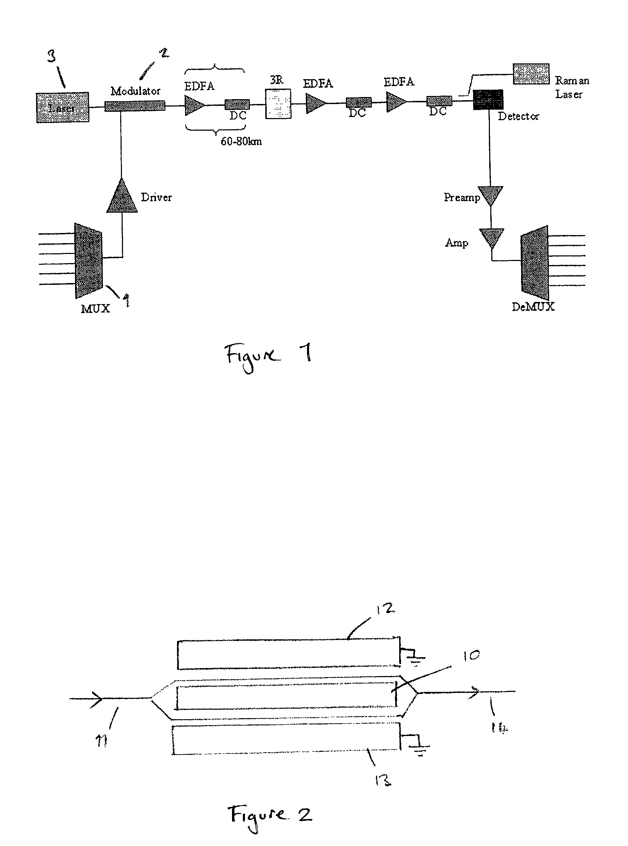

Long haul communication systems typically use optical signals rather than electrical signals due to them having a much higher bandwidth and lower loss than equivalent electrical systems. A simplified schematic of a long haul optical communications system is shown in Fig. 1. A number of digital data streams are required to be transmitted over the optical communication system and these digital data streams are combined by the multiplexer 1. In order to convert the digital electronics signals to an optical signal an optical modulator 2 is used. The digital data streams are used to drive the modulator 2. In general a driver or amplifier is required to boost the signals from the multiplexer 1 to a sufficient level to drive the modulator 2. A laser 3 provides a coherent optical signal which is modulated by the modulator 2. The modulated optical signal is then transmitted over the transmission line and is amplified at regular intervals and may even undergo 3R processing. At the other end of the transmission system the optical signal is detected and converted into an electrical signal and demultiplexed.

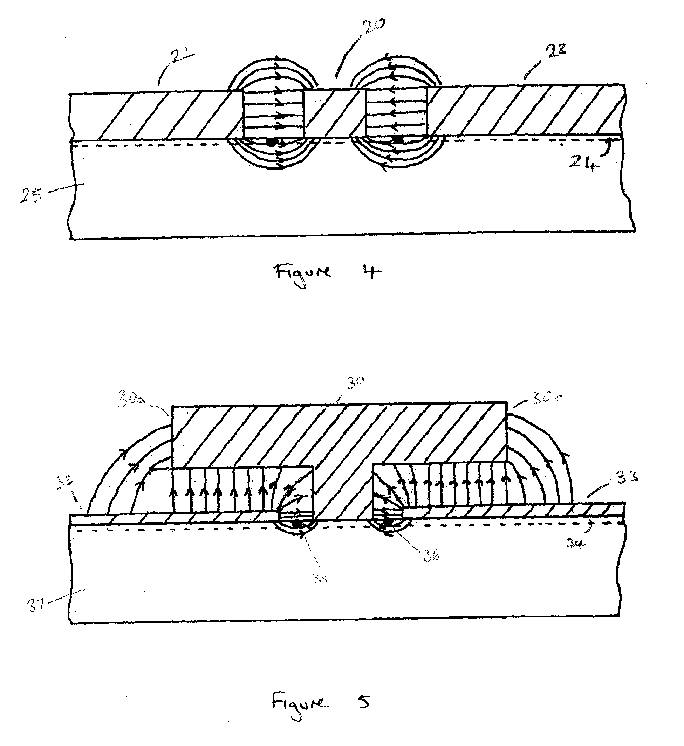

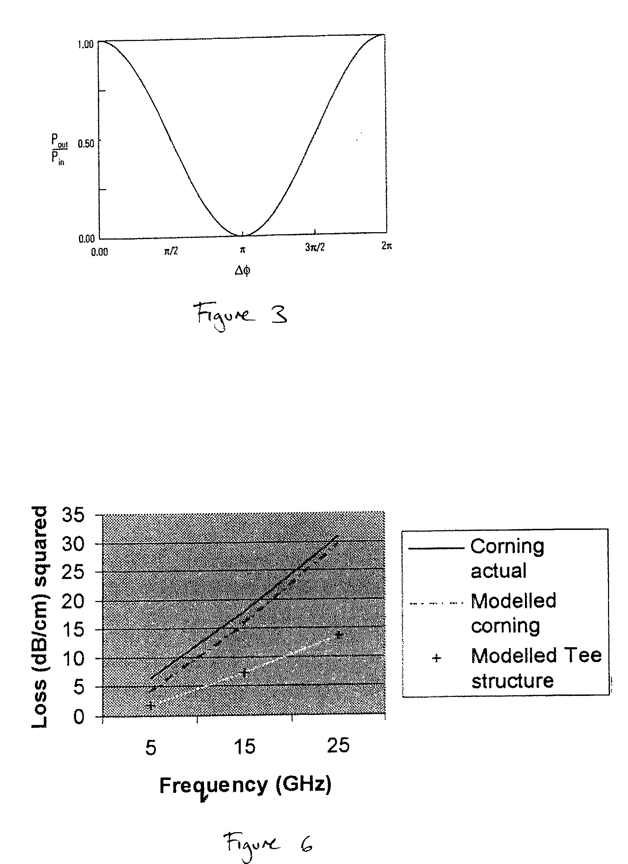

Figure 2 shows a simplified representation of the key features of a Mach-Zehnder optical modulator. The optical signal from the laser is split equally into two separate arms or phase modulators, with the signal in each arm travelling different, but equal length, paths. At the far end of the device, the two signals are recombined in phase and the original source intensity reconstructed with a small amount of propagation loss. However, if one path is made to have a longer optical path length, by half a wavelength, the two arms combine out of phase and no light emerges at the device output. The most widely used material for fabricating these types of devices is lithium niobate, in which phase modulation of the two arms is provided by an applied electric field between the centre conductor 10 of a coplanar stripline waveguide and the ground plane conductors 12,13 in conjunction with the electro-optic or Pockels effect. A plot of normalised optical output intensity versus phase angle is given in Figure 3, from which it can be seen that an optical signal varies from a minimum optical insertion loss when the two signals combine in phase to a maximum insertion loss when the two signals are in anti-phase.

There are two main processes for patterning single-mode optical waveguides onto lithium niobate, titanium indiffusion and annealed proton exchange. In both cases the waveguide pattern is defined on a surface of a lithium niobate crystal by evaporation or sputtering and the optical guide pattern defined using photolithography. The more widely used method is titanium indiffusion. To create a titanium waveguide, titanium is diffused through a mask into the substrate at a temperature near 1,000°C. This results in a permanent increase in the refractive index that guides the light in both width and depth. Titanium waveguides support both transverse electric (TE) and transverse magnetic (TM) optical polarisations.

Lithium niobate is an isotropic, uniaxial crystal with n₀ = nₓ = ny = 2.23 and nₑ = nₓ = 2.15, where n₀ is the ordinary index reflection and nₑ is the extra-ordinary index of refraction. Due to the crystal symmetry in lithium niobate, there are two useful crystal orientations, z-cut and x-cut, which take advantage of the strongest electro-optic coefficient.

A cross section of a typical modulator using x-cut lithium niobate is shown in Figure 4. This shows the stripline coplanar waveguide on the lithium niobate with a thin silica buffer layer in between. The optical guides forming the two arms of the modulator are positioned in each slot of the coplanar line. These optical guides are formed by depositing titanium into the lithium niobate as described above. The silica layer and gold metallisation for the stripline waveguide are deposited and etched later. The silica buffer layer is there to speed up the velocity of the digital data (microwave) signal so that it more closely matches that of the optical signal.

The signal is fed down the coplanar line and provides an instantaneous electric field as shown in Figure 4. The electric field developed across the optical guide changes the refractive index in each of the arms of the modulator due to the electro-optic effect. When there is no data signal the optical signals from the two arms combine in phase and the optical insertion loss is a minimum. When the changes in refractive indices in each arm are such that the signals combine in anti-phase the insertion loss is a maximum.

There are several factors which need to be considered in optimising the design of a Mach-Zehnder modulator of this type. The electro-optic effect is fairly weak and in order to improve the sensitivity of the modulator the interaction length between the coplanar waveguide and the optical waveguide needs to be relatively long. Typically this length is in the region of 3 cm. However, in order to make use of this interaction over a very long length, the velocity of the spectral components of the digital microwave signal and the optical signal need to be well matched. In a modulator on lithium niobate, if the coplanar electrodes are deposited directly onto the lithium niobate substrate, the velocity of the microwave signal will be less than the velocity of the optical signal. Therefore, it is necessary to introduce a thin buffer layer of silica to reduce the effective dielectric constant and increase the velocity of the microwave signal to more closely match the optical velocity. However, the introduction of this buffer layer reduces the field gradient across the optical waveguide, thereby reducing the sensitivity of the device as a whole.

In principal, this reduction in sensitivity can be overcome by making the interaction length longer, providing the velocities of the microwave and optical signals are well matched. However, this is only of use up to a point. The loss per unit length of the coplanar waveguide structure is typically quite high, around 2.5 dB/cm, which is virtually entirely due to loss in the gold metallisation. This loss means that there is no point in continuing to increase the interaction length in order to increase the sensitivity because after a certain length the signal has been attenuated to such an extent that there is no met benefit or improvement in sensitivity.

A further way to increase the sensitivity is to increase the field strength across the optical waveguide by decreasing the width between the electrodes. However, this increases the current concentration in the edges of the electrodes of the coplanar waveguide and increases the overall loss in the electrodes. Furthermore, a narrow gap decreases the impedance of the line which makes it difficult to match the modulator to 50 ohms which is the typical value required.

It is possible to decrease the loss by plating up the gold metallisation, thus reducing the impedance, but it is difficult to obtain an acceptable production yield with current photo resist geometries and photo lithographic limitations. Some designs use up to 40 microns of metallisation. Unfortunately it is not possible to achieve a narrow gap and a very thick conductor layer owing to manufacturing difficulties. In practice the metallisation layer is made 20-40 microns thick to give low loss and the gap widened to give acceptable yields in high volume manufacturing.

According to a first aspect of the present invention a waveguide structure comprises:
a crystal substrate having electro-optic properties;
an optical waveguide formed in the substrate and extending in a first direction; and,
an electrode structure formed on the surface of the substrate, including a signal electrode and a ground electrode extending parallel to one another in the first direction, so as to allow an electric field to be generated across the optical waveguide,
characterised in that the signal and ground electrodes overlap one another in a direction perpendicular to the first direction and are spaced from one another.

Preferably, the signal electrode includes a foot portion formed on the substrate and an extending portion spaced from the substrate and overlapping the ground electrode. Preferably, the extending portion is formed parallel to the surface of the substrate.

According to a second aspect of the present invention an optical modulator comprises a waveguide structure according to the first aspect of the invention.

According to a third aspect of the present invention an optical modulator comprises:
a crystal substrate having electro-optic properties;
a pair of parallel waveguides formed in the substrate extending in a first direction; and,
an electrode structure formed on the surface of the substrate, including a central signal electrode and a pair of ground electrodes positioned on either side of the signal electrodes so as to allow electric fields to be generated across each waveguide, the electric field across one waveguide being of opposite polarity to the electric field formed across the other waveguide,
characterised in that the signal and ground electrodes overlap in a direction perpendicular to the first direction and are spaced from one another.

Preferably, the signal electrode includes a foot portion formed on the substrate and extending portions spaced from the substrate and overlapping both ground electrodes. Preferably, the extending portions are formed parallel to the surface of the substrate.

According to a fourth aspect of the present invention a optical modulating package includes an optical modulator according to the second or third aspect of the invention and a driver, the driver having an output impedance matched to the line impedance of the modulator.

Preferably, the spacing between the or each overlapped portion of the signal electrode and the adjacent the ground electrode is greater than the spacing between the corresponding ground electrode and the foot portion of signal electrodes when measured on the surface of the substrate.

Preferably, the optical waveguide structure includes a buffer layer formed between the substrate and the electrodes.

The electrode structure of the present invention provides an overlap between the extending portion of the signal electrode and the ground electrodes. This effectively provides two parallel plate transmission lines. This reduces the concentration of current in the edges of the electrodes and therefore reduces the impedance and loss of the overall electrode structure.

Examples of the present invention will now be described with reference to the accompanying drawings, in which:
Figure 1 is a schematic diagram of a long haul optical communication system;
Figure 2 is a simplified diagram of a typical Mach-Zehnder interferometer based on the electro optic effect;
Figure 3 shows a plot of optical output intensity versus phase angle for the modulator of Figure 2;
Figure 4 shows a cross-sectional view of a typical Mac-Zehnder interferometer using the optoelectric effect, with electric field lines shown;
Figure 5 shows the electrode structure according to one embodiment of the present invention;
Figure 6 is a plot of loss versus frequency showing data for a conventional electrode structure and an electrode structure according to the present invention.

Amplitude modulators for use in long haul optical communication systems are typically constructed by patterning a Mach-Zehnder interferometer onto a lithium niobate substrate. This is shown in Figure 2. An input optical waveguide 11 is split into two paths and recombined at an output waveguide 14. An electrode structure 10,12,13 is positioned on the substrate containing the waveguide in the region where the waveguide is split into two parts. A voltage applied to the centre electrode 10 with the side electrodes 12,13 grounded results in an electric field across the two paths of the interferometer. The electric field across one of the arms of the interferometer is of opposite polarity to the electric field across the other. This is called a "push-pull" configuration. The positive and negative electric fields change the refractive index of the lithium niobate in opposite senses. This increases the relative phase shift in one path and decreases it in the other path. Figure 4 shows the electric field lines across the optical waveguides. Both Figures 4 and 5 show a configuration for an x-cut lithium niobate crystal 25. Another configuration is possible, that of a z-cut crystal in which the electrodes are arranged such that the electric field lines passing through each of the waveguides are in a vertical direction rather than in a horizontal direction.

When the signals in each path of the interferometer are recombined the resulting amplitude is dependent on the net phase difference between the two signals. As shown in Figure 3, when there is no net phase difference between the two signals the amplitude of the output signal is substantially unchanged, however when the two signals are for example out of phase, there is almost total extinction of the signal.

Typically to create a well defined electric field within the optical waveguide, thick gold electrodes 20,22, 23 are deposited on the lithium niobate substrate 25 as shown in Figure 4. The modulation bandwidth of an integrated optic modulator depends on the type of electrodes used. For high bit-rate signals a travelling wave electrode structure is typically used. Travelling wave electrodes are designed as transmission lines, fed at one end and terminated with a resistive load at the other end. With travelling wave electrodes the modulator bandwidth is limited by the difference between the optical and the microwave signal transmit times across the crystal. In order to match the velocities of the microwave signal and the optical signal an intermediate buffer layer of silica 24 is used. The layer of silica 24 reduces the effective dielectric constant of the electrode structure and therefore increases the velocity of the microwave signal to more closely match the velocity of the optical signal.

With the structure shown in Figure 4 the current flowing in the electrode structure is typically confined to the edge regions of the ground electrodes 22, 23 closest to the signal electrode 20. This restricted area has significance for the overall loss of the electrode structure.

Figure 5 shows an electrode structure according to one embodiment of the present invention. The signal electrode 30 includes an extending portions or arms 30a positioned above a central column of the electrode and extending parallel to the substrate such that it overlaps the two ground electrodes 32,33. The overlap of the arms 30a, 30b of this electrode structure provides what is effectively two parallel plate transmission lines. The current in the ground electrodes 32,33 is therefore not restricted to the edges but spaced over the extent of the overlapping portion. This reduces the impedance of the line and therefore reduces the loss of the line. This means that the interaction length of the modulator can be increased, providing a greater sensitivity.

An additional benefit of this T-shape design is that a much larger proportion of the field is in the air than would be with the conventional coplanar electrode structure shown in Figure 4. This means that the microwave velocity is increased which enables good velocity matching between the microwave signal and the optical signal to be achieved with a thinner buffer layer 34. The thinner the buffer layer the greater the field gradient across the optical waveguides 35,36. The greater the field gradient the more sensitive the modulator.

With this design the ground electrodes can be made thinner as the current is spread. This allows the slot spacing to be made smaller thus easing the manufacture. By making the spacing between the overlapping portion of the signal electrode and the ground electrodes greater than the slot width for the waveguides, losses are further reduced.

Figure 6 shows a plot of the loss per unit length squared of modulator structure versus frequency. The uppermost line shows results published by Corning, a modulator manufacturer using a conventional electrode structure. The central dotted line shows modelled results of a conventional electrode structure using commercially available electrode magnetic modelling software. The lower dotted line shows modelled results using the T-shaped structure described above. The plot is shown in terms of frequency squared because conductor loss increases with the square route of frequency. Therefore a line with only conductor loss plotted as loss squared against frequency would be a straight line. The plot shown deviates from a straight line due to the dielectric loss which increases linearly with frequency. It can be seen that the overlapping structure of the present invention has significantly lower loss than standard coplanar electrode structures. The electro-optic interaction is not decreased as compared with convention design as the line geometry in the region of the optical guides remains the same. The lower loss of the structure enables the interaction length to be increased which increases the sensitivity of the modulator.

In general, the use of an additional structure on the electrode will decrease the impedance compared with the basic coplanar line. The extra capacitance of the T-structure means that the characteristic impedence of the line is in the region of 20 to 30 ohms. Therefore it is preferable to package the modulator with a driver. The driver is designed to have a standard 50 ohm input, but with an output impedance matched to the line impedance of the modulator.

The present invention has been described with reference to a T-shaped structure in a modulator. This serves as a useful example but it should be understood that the signal electrode could have, for example, a Y-shaped cross-section, as long as an overlap with a ground electrode is formed.

Similarly the electrode structure could be used to provide an electric field across a single waveguide and in this case the signal electrode could have an inverted L-shape cross-section or any other shape providing an overlap with the ground electrode.

## Claims

1. A waveguide structure comprising:
a crystal substrate (37) having electro-optic properties;
an optical waveguide (35) formed in the substrate and extending in a first direction; and
an electrode structure (30,32) formed on the surface of the substrate, including a signal electrode (30) and a ground electrode (32) extending parallel to one another in the first direction, so as to allow an electric field to be generated across the optical waveguide (35),
**characterised in that** the signal and ground electrodes (30,32) overlap one another in a direction perpendicular to the first direction and are spaced from one another..

2. A waveguide structure according to claim 1, wherein the signal electrode (30) includes a foot portion formed on the substrate (37) and an extending portion (30a) spaced from the substrate (37) and overlapping the ground electrode (32).

3. An optical modulator comprising a waveguide structure according to claims 1 or 2.

4. An optical modulator comprising:
a crystal substrate (37) having electro-optic properties;
a pair of parallel optical waveguides (35,36) formed in the substrate extending in a first direction; and
an electrode structure (30,32,33) formed on the surface of the substrate (37), including a central signal electrode (30) and a pair of ground electrodes (32,33) positioned on either side of the signal electrode (30) so as to allow electric fields to be generated across each waveguide (35,36), the electric field across one waveguide being of opposite polarity to the electric field formed across the other waveguide,
**characterised in that** the signal and ground electrodes (30,32) overlap in a direction perpendicular to the first direction and are spaced from one another.

5. An optical modulator according to claim 4, wherein the signal electrode (30) includes a foot portion formed on the substrate (37) and extending portions (30a,30b) spaced from the substrate (37) and overlapping both ground electrodes (32,33).

6. A waveguide structure or an optical modulator according to any one of the preceding claims, wherein the or each extending portion (30a,30b) is formed parallel to the surface of the substrate (37).

7. A waveguide structure or an optical modulator according to any one of the preceding claims, wherein the spacing between the or each extending portion (30a,30b) and its adjacent ground electrode (32,33) is greater than the spacing between the foot portion of signal electrode (30) and the corresponding ground electrode (32,33) when measured on the surface of the substrate (37).

8. A waveguide structure or optical modulator according to any one of the preceding claims, further comprising a buffer layer (24) formed between the substrate (37) and the electrode structure (30,32,33).

9. An optical modulator package including an optical modulator according to any one of claims 3 to 8; and,
a driver, the driver having an output impedance matched to the line impedance of the modulator.
